# EUROPÄISCHE PATENTSCHRIFT

(11) **EP 0 892 830 B1**
(45) Veröffentlichungstag und Bekanntmachung des Hinweises auf die Patenterteilung: **13.08.2003**
(21) Anmeldenummer: 96945824.9
(22) Anmeldetag: 23.10.1996
(51) Int. Cl.: C08L 23/10, B32B 27/32

(54) **MEHRLAGENFOLIE, VERFAHREN ZU IHRER HERSTELLUNG UND IHRE VERWENDUNG**
MULTILAYERED SHEET, PROCESS FOR THE PRODUCTION THEREOF AND USE THEREOF
FEUILLE MULTICOUCHE, SON PROCEDE DE FABRICATION ET SON UTILISATION

(30) Priorität: 21.03.1996 DE 29605214 U; 29.09.1996 DE 19640038
(43) Veröffentlichungstag der Anmeldung: 27.01.1999
(73) Patentinhaber: Kobusch-Sengewald GmbH & Co.KG, 34414 Warburg (DE)
(72) Erfinder: LANGE, Winfried, D-33335 Gütersloh (DE)
(74) Vertreter: Neidl-Stippler & Partner
(86) Internationale Anmeldenummer: DE9602012
(87) Internationale Veröffentlichungsnummer: WO97034951

(56) Entgegenhaltungen:
- EP-A- 0 380 145
- EP-A- 0 437 856
- EP-A- 0 704 482
- EP-A- 0 739 713
- WO-A-95/26177
- US-A- 4 778 697

## Beschreibung

Die Erfindung betrifft eine Mehrlagenfolie mit Polymer-Außenschicht, Polymer-Verbindungsschicht und heißsiegelbarer Polymer-Innenschicht, Verfahren zur Herstellung derselben und deren Verwendung.

Derartige Mehrlagenfolien, die bevorzugt heißsiegelbar sind, werden bereits seit längerem zur Herstellung von flüssigkeitsdichten, insbesondere wasserdampfdichten Beuteln eingesetzt. Sie werden insbesondere für Beutel als Primärverpackungen von medizinischen Flüssigkeiten und Lösungen verwendet. Sie können auch als Drainagebeutel eingesetzt werden. Dabei ist es meist ausreichend, daß sie flüssigkeitsdicht sind.

In speziellen Fällen, insbesondere dann, wenn sie als Primärverpackung von sauerstoffempfindlichen Materialien eingesetzt werden, kann auch eine entsprechende Gassperreigenschaft erwünscht sein. Dies ist beispielsweise für den Einsatz als Verpackung von Aminosäurelösungen der Fall bzw. dann, wenn der Zutritt oder Abgabe von CO₂ bspw. zu unerwünschten pH-Wertänderungen führen kann bzw. der Inhalt bei Zutritt von Sauerstoff oxidiert und sich dadurch verändert.

Bisher werden für medizinische Flüssigkeiten und Lösungen neben der Glasflasche, die schwer und unhandlich ist, häufig Beutel aus Weich-PVC eingesetzt. Diese sind hinsichtlich ihrer Flexibilität und Siegelbarkeit zufriedenstellend, haben aber den Nachteil, daß die darin enthaltenen Weichmacher durch Migration im PVC leicht in das Beutelinnere diffundierten und so zu einer höchst unerwünschten Verunreinigung des Inhalts führen konnten. Besonders bei Infusionslösungen ist es äußerst unerwünscht, daß diese Weichmacher mit der Lösung in den Patienten gelangen.

Ein weiterer Nachteil der bekannten Weich-PVC-Beutel besteht darin, daß diese aufgrund der bei der Verbrennung auftretenden Chlorverbindungen und Dioxine Schwierigkeiten bei der Abfallbeseitigung hervorrufen. Es wurde bereits vorgeschlagen, anstelle von PVC(Polyvinylchlorid) Polyethylenbeutel einzusetzen. Dieses Material hat jedoch bei den meisten Typen den Nachteil, daß es maximal bei einer Temperatur von 121°C autoklavierbar ist (Wasserdampfsterilisation). Ferner fehlte es den Polyethylen-Altemativen häufig an der erwünschten Transparenz und Flexibilität.

Die US 4778679 der American National Can Company beschreibt eine Mehrschichtfolie, die auch sterilisierbar ist, die eine Kombination einer hauptsächlich HDPE aufweisenden Verbindungsschicht mit einer Polypropylen-Mischung mit einem TPE als Außenschicht aufweist. Dabei werden Kombinationen von Folien auf Polypropylenbasis mit Folien mit Polymeren auf Polyethylenbasis eingesetzt, da letzteres die Brüchigkeit und Inflexibilität des Polypropylens vermeidet, während die Halogenfreiheit und Schweißbarkeit der Folie gewährleistet ist. Diese bekannte Folie war aber hinsichtlich ihrer äußeren Erscheinung (Durchsichtigkeit) noch verbesserungsfähig.

Aus der DE-A-44 10 876 ist eine coextrudierte Peel-Mehrschichtfolie mit einer Polypropylen-TPS-Mischung mit einer bei einer Temperatur von 115 - 150°C heißsiegelbaren Innenschicht, einer Polypropylen-Homopolymerschicht als Außenschicht sowie einer Polypropylen/VLDPE-Schicht als Verbindungsschicht beschrieben. Diese bekannte Mehrschichtfolie ist jedoch sowohl hinsichtlich ihrer Transparenz als auch ihrer Flexibilität und hinsichtlich der Adhäsion der die Mehrlagenfolie bildenden Schichten aneinander verbesserungsfähig, wie sich bereits daraus ableiten läßt, daß es sich um eine Peel-Folie handelt - also um eine solche, deren Schichten sich voneinander ablösen lassen.

Auch die EP 0437856 (IDEMITSU) beschreibt ein peelfähiges Mehrschichtfolienprodukt auf Polystyrol-Grundlage, wobei Polypropylenhaltige Schichten gemeinsam mit Polystyrol-haltigen Schichten als leicht trennbare - peelfähige Schichten - produziert werden.

Daraus ergibt sich, daß bei vielen bekannten Mehrschichtfolien mit einem hohen Polypropylen-Anteil die Verbindung der Schichten aneinander, die wesentlich für die Festigkeit und auch das Aussehen des Folienverbundes ist, problematisch ist.

Die grundlegenden Anforderungen an Mehrschichtfolien zum Einsatz als Verpackung von wäßrigen Lösungen, insbesondere Infusionslösungen od. dgl. sind also, daß diese
- hohe Flexibilität
- sehr gute Transparenz
- niedrige Wasserdampfdurchlässigkeit
- physiologische Unbedenklichkeit und mechanische Stabilität aufweisen,
- siegelbar mit dauerbeheizten Werkzeugen oder impulsschweißbar - autoklavierbar auch oberhalb von 121°C sind, und
- für besondere Nahrungsmittel oder medizinische Flüssigkeiten und Lösungen kann auch eine zusätzliche Barrierewirkung gegen Sauerstoff und/oder Kohlendioxid vorliegen

Es ist demzufolge Aufgabe der Erfindung, eine transparente, schweißbare, d.h. impulsschweißbare oder heißsiegelbare Mehrschichtfolie zu schaffen, die leicht zu entsorgen ist, eine Materialalternative zum bisher verwendeten Weich-PVC ist und durch ihre besonderen Eigenschaften auch für andere Anwendungsgebiete außerhalb den für Weich-PVC üblichen vorgesehen werden kann.

Die Aufgabe wird erfindungsgemäß durch eine Mehrlagenfolie mit den Merkmalen des Patentanspruches 1 gelöst.

Bevorzugt weist die Innenschicht eine niedrigere Siegeltemperatur als die Außenschicht auf, wodurch dann das Heißsiegeln mit dauerbeheizten Werkzeugen möglich ist. Es ist aber auch möglich, Mehrlagenfolien ohne ein derartiges Schmelzpunktgefälle der Folien herzustellen - diese müssen dann bspw. impulsgeschweißt werden.

Vorteilhafterweise ist mindestens ein thermoplastisches Elastomer ausgewählt aus der Gruppe der Styrolblockcopolymere (TPE-S, z.B. SEPS, SIS, SEBS, SBS), Polyetherester (TPE-E), Polyurethane (TPE-U), Polyetheramide (TPE-A) oder aus der Gruppe der EPDM/PP-Mischungen oder aus der Gruppe der Butylkautschuk/PP-Mischungen.

TPE ist hier die allgemein übliche Abkürzung für thermoplastisches Elastomer.

Unter SEBS wird hier Styrol-Ethylen/Butylen-Styrol Triblock-Polymer; unter SBS ein Styprol-Butylen-Styrol Diblock-Polymer, unter SEPS ein Styrol-Ethylen/Propylen-Styrol Triblock-Polymer und unter SIS ein Styrol-lsopren-Styrol Triblock-Polymer verstanden.

Unter EPDM wird ein Terpolymer aus Ethylen, Propylen und einem nichtkonjugierten Dien (EPDM) und/oder Ethylen-Alpha-Olefin-Copolymer verstanden.

Unter Butylkautschuk wird ein Copolymeres von Isobutylen und Isopren verstanden.

Zur Mischung mit Polypropylen kann neben den beschriebenen thermoplastisches Elastomeren zusätzlich oder alleine auch ein Polyisobutylen (eingemischt oder auch nachträglich zugemischt) verwendet werden, das eine hohe Flexibilität und einen niedrigen Schmelzpunkt aufweist

Es ist besonders bevorzugt, daß die mindestens eine Zwischenschicht einen höheren Anteil an thermoplastisches Elastomer aufweist, da dadurch eine höhere Flexibilität erzielt wird. Es kann aber auch sinnvoll sein, als Zwischenschicht zusätzlich oder alternativ Polyisobutylen einzusetzen.

Es kann erforderlich sein, daß die Außenschicht eine Barriere gegen Sauerstoff - und/oder Kohlendioxid ist.

Dies kann bspw. dadurch erzielt werden, daß die Außenschicht ausgewählt ist aus der Gruppe bestehend aus Polyamid 6, Polyamid 66, Polyamid 610, Polyamid 6/66, Polyamid 66/610, aromatisches Polyamid oder Abmischungen dieser Materialien.

Eine bevorzugte Außenschicht besteht aus einer Mischung aus 65 bis 95 Gew.% eines aromatischen Polyamids mit einem Polyamid 6,6. Es eignet sich bspw. ein Polyamid 66 mit einer Viskositätszahl von mindestens 200 (nach DIN 53727/Schwefelsäure).

Derartige Sperrschichten müssen aber mittels eines Haftvermittlers am Schichtverbund befestigt werden und können als dritte, vierte oder weitere Außenschicht vorgesehen sein.

Es kann auch sinnvoll sein, falls keine Gas-Sperreigenschaften nötig sind, daß die Außenschicht ein Polypropylen-Homopolymerisat oder aber auch ein Polypropylen-Copolymerisat ist. Diese Schicht eignet sich insbesondere im Verbund mit einer Verbindungsschicht, bestehend aus einem Polypropylen-Mischung aus einem Polypropylen - Homopolymerisat, einem TPE-S und einem Plasticiser und einer heißsiegelbaren Innenschicht aus einem Polypropylen-Mischung bestehend aus einem Polypropylen-Homopolyme-risat und einem TPE-S.

Bevorzugt für das Heißsiegelverfahren ist eine Außenschicht aus einem Polypropylen-Homopolymerisat.

Als Außenschicht kann neben einem Polypropylen-Copolymerisat auch ein Polyisobuten/Polypropylen-Mischung eingesetzt werden - in diesen Fällen ist die Mehrlagenfolie dann aufgrund der Schmelzeigenschaften der Außenlage zur Siegelschicht mittels Impulsschweißen verbindbar.

Die mindestens eine Verbindungsschicht im Folienverbund sorgt nicht nur für die Haftung der Außen- und Innenschicht aneinander, sondern auch für die Flexibilität der Mehrlagenfolie. Somit wird das Verbindungsschichtmaterial danach ausgewählt, daß es hoch-flexibel ist und auch eine gute Haftung an den benachbarten Schichten eingeht. Dazu kommt noch die bevorzugt sehr gute Kontakttransparenz dieser Verbindungsschicht in der Mehrlagenfolie, um die Gesamttransparenz der Folie nicht negativ zu beeinflussen.

Ein derartiger Verbund kann bspw. durch Coextrusion hergestellt werden, wobei die Schichten aufgrund der Coextrusion problemlos aneinanderhaften und gewährleistet dennoch eine gute Siegelbarkeit der Innenfolie durch ein Schmelzpunktgefälle der Schichten von außen nach innen.

Es kann aber auch eine Mehrlagenfolie ohne deutliches Temperaturgefälle ausgebildet werden, wobei diese dann bspw. nach dem Impulsverfahren verschweißbar ist.

Eine typische Gesamt-Foliendicke liegt bspw. im Bereich von 100 bis 350 µm.

Es ist besonders bevorzugt, daß die Schichten coextrudiert sind, wodurch das Vorsehen von Adhäsionsverbesserern oder aber auch Klebstoffen vermieden werden kann und die Herstellung der Mehrschichtfolie in einem einzigen Herstellungsschritt erfolgen kann. Gegebenenfalls können aber auch Außenschichten in an sich bekannter Weise aufkaschiert werden.

Besonders bevorzugt wird die coextrudierte Folie in Schichten von oben nach unten coextrudiert und sodann abgeschreckt, Bevorzugt erfolgt das Abschrekken durch Extrusion in ein Wasserbad. Durch dieses Abschrecken wird der amorphe Zustand des Polymeren aus der Schmelze erhalten und die Flexibilität sowie Transparenz derselben gegenüber nicht abgeschreckten Folien erheblich verbessert.

Es ist insbesondere für die Verwendung der Mehrschichtfolie zur Herstellung von Beuteln günstig, wenn das Material als Schlauch extrudiert wird. Dadurch wird eine Kontamination der Innenseiten des Beutels durch Keime vermieden, insbesondere wenn zum Aufblasen des Folienschlauches ein inertes Gas (z.B. Stickstoff) anstelle der Umgebungsluft benutzt wird.

Es ist besonders bevorzugt, die erfindungsgemäße Mehrlagenfolie zur Herstellung von Beuteln für Nahrungszwecke und medizinischen Flüssigkeiten und Lösungen einzusetzen.

Als konkrete Anwendungsbeispiele seien nur einige genannt:
a) für Nahrungszwecke:
   Wein, gefrorener Kaffeextrakt und Marmelade
b) für medizinischen Flüssigkeiten und Lösungen:
   Kochsalzlösungen, Blut, Blutersatzlösungen, Dialyselösungen, Aminosäurelösungen - es können aber auch andere pastöse oder flüssige oder trockene Materialien verpackt werden, insbesondere solche, die ggf. sterilisiert werden sollen oder heiß abgefüllt werden.

Für bestimmte Anforderungen kann es auch nicht erforderlich sein, die Folie als coextrudierten Schlauch in Beutelbreite durch ein Wasserbad abzuschrekken. Dann wird die Folie auf einer Blasfolien- oder Gießfolienanlage coextrudiert und als Schlauch bzw. Flachbahn ohne Wasserkühlung weiterverarbeitet.

Dies kann z.B. in der Form geschehen, daß in einer nächsten Verarbeitungsstufe eine oder mehrere Folienlagen auf die coextrudierte Folie aufkaschiert werden. Solche Folien können ausgewählt sein nach bestimmten Sperreigenschaften (z.B. gegen Sauerstoff) oder auch um das Schmelzpunktgefälle deutlich zu erhöhen.

Bevorzugt geschieht die Weiterverarbeitung einer solchen coextrudierten Folie als doppelt flachgelegte Bahn auf handelsüblichen Konfektionsanlagen mit Dreirand-Siegelung.

Die so hergestellten Beutel werden häufig für medizinische Abfall-Flüssigkeiten und -Lösungen (wie bspw. Drainageflüssigkeiten) eingesetzt.

Nachfolgend wird die Erfindung anhand von Ausführungsbeispielen, auf die der Schutzumfang keineswegs beschränkt ist, näher erläutert.

### Beispiel 1

Mehrlagenfolie auf Polypropylenbasis:
Außenlage:
   DAPLEN KF 201 (erhältlich von der PCD/Linz)
   Polypropylen-Homopolymerisat mit einer Dicke von 15 µm
Verbindungsschicht:
   CAWITON MED PR 3530 (erhältlich von der Fa WITTENBURG/Bussum - Niederlande)
   Polypropylen-Mischung mit einer Dicke von 95 µm bestehend aus
   a) Polypropylen-Homopolymerisat
   b) SEBS als TPE-S
   c) Plasticiser
Innenschicht:
   CAWITON MED PR 3663 (erhältlich von der Fa WITTENBURG/Bussum - Niederlande)
   Polypropylen-Mischung mit einer Dicke von 40 µm bestehend aus
   a) Polypropylen-Homopolymerisat
   b) SEBS als TPE-S

Die Gesamtdicke der in ein Wasserbad extrudierten Mehrlagenverbundfolie betrug etwa 150 µm.

Es wurde eine klare, gut siegelbare Folie erhalten.

### Beispiel 2:

Mehrlagenfolie auf Polypropylenbasis:
Außenlage:
   DAPLEN KF 201 (erhältlich von der PCD/Linz)
   Polypropylen-Homopolymerisat mit einer Dicke von 20 µm
Verbindungsschicht:
   CAWITON MED PR 3530 (erhältlich von der Fa WITTENBURG/Bussum - Niederlande)
   Polypropylen-Mischung mit einer Dicke von 125 µm bestehend aus
   a) Polypropylen-Homopolymerisat
   b) SEBS als TPE-S
   c) Plasziciser
Innenschicht:
   CAWITON MED PR 3663 (erhältlich von der Fa WITTENBURG/Bussum - Niederlande)
   Polypropylen-Mischung mit einer Dicke von 55 µm bestehend aus
   a) Polypropylen-Homopolymerisat
   b) SEBS als TPE-S

Die Gesamtdicke der in ein Wasserbad extrudierten Mehrlagenverbundfolie betrug etwa 200 µm.

### Beispiel 3:

Mehrlagenfolie auf Polypropylenbasis:
Außenlage:
   DAPLEN KF 201 (erhältlich von der PCD/Linz)
   Polypropylen-Homopolymerisat mit einer Dicke von 25 µm
Verbindungsschicht:
   CAWITON MED PR 3530 (erhältlich von der Fa WITTENBURG/Bussum - Niederlande)
   Polypropylen-Mischung mit einer Dicke von 155 µm bestehend aus
   a) Polypropylen-Homopolymerisat
   b) SEBS als TPE-S
   c) Plasziciser
Innenschicht:
   CAWITON MED PR 3663 (erhältlich von der Fa WITTENBURG/Bussum - Niederlande)
   Polypropylen-Mischung mit einer Dicke von 70 µm bestehend aus
   a) Polypropylen-Homopolymerisat
   b) SEBS als TPE-S

Die Gesamtdicke der in ein Wasserbad extrudierten Mehrlagenverbundfolie betrug etwa 250 µm.

### Beispiel 4:

Mehrlagenfolie mit Sperrwirkung gegen Sauerstoff:
Außenlage:
   90 Gew.% Nylon MXD 6 (erhältlich von der MITSUBISHI INT./Düsseldorf)
   10 Gew.% AKULON S 240 C (erhältlich von der DSM/Düsseldorf)
   Polyamid mit einer Dicke von 20 µm
Verbindungsschicht 1:
   ADMER NF QB 540 E (erhältlich von der MITSUI/Düsseldorf)
   Haftvermittler PA-PP mit einer Dicke von 4 µm
Verbindungsschicht 2:
   CAWITON MED PR 3530 (erhältlich von der Fa WITTENBURG/Bussum - Niederlande)
   Polypropylen-Mischung mit einer Dicke von 120 µm bestehend aus
   a) Polypropylen-Homopolymerisat
   b) SEBS als TPE-S
   c) Plasziciser
Innenschicht:
   CAWITON MED PR 3663 (erhältlich von der Fa WITTENBURG/Bussum - Niederlande)
   Polypropylen-Mischung mit einer Dicke von 55 µm bestehend aus
   a) Polypropylen-Homopolymerisat
   b) SEBS als TPE-S

Die Gesamtdicke der in ein Wasserbad extrudierten Mehrtagenverbundfolie betrug etwa 200 µm. Die Folie war gut heißsiegelbar und gasdicht gegen Sauerstoff unter normalen Umgebungsbedingungen.

### Beispiel 5:

Mehrlagenfolie:
Außenlage:
   Novolen 3200 HX (erhältlich von der BASF/Ludwigshafen)
   Polypropylen-Copolymerisat mit einer Dicke von 20 µm
Verbindungsschicht:
   CAWITON MED PR 3530 (erhältlich von der Fa WITTENBURG/Bussum - Niederlande)
   Polypropylen-Mischung mit einer Dicke von 125 µm bestehend aus
   a) Polypropylen-Homopolymerisat
   b) SEBS als TPE-S
   c) Plasziciser
Innenschicht:
   CAWITON MED PR 3663 (erhältlich von der Fa WITTENBURG/Bussum - Niederlande)
   Polypropylen-Mischung mit einer Dicke von 55 µm bestehend aus
   a) Polypropylen-Homopolymerisat
   b) SEBS als TPE-S

Die Gesamtdicke der in ein Wasserbad extrudierten Mehrlagenverbundfolie betrug etwa 200 µm.

Diese Mehrlagenfolien bzw. daraus hergestellte Beutel sind insbesondere für medizinische Zwecke heißsterilisierbar und geben auch keine Inhaltsstoffe der Folien - wie Weichmacher/Plasticizer od. dgl. an wäßrige Materialien, die sich im Beutelinneren befinden, ab.

Obwohl die Erfindung anhand bevorzugter Ausführungsbeispiele näher erläutert wurde, ist es dem Fachmann offensichtlich, daß vielfältige Abwandlungen, wie sie im Schutzumfang der Ansprüche enthalten sind, möglich sind.

## Patentansprüche

1. Transparente Mehrlagenfolie mit
einer Polymer-Außenschicht,
mindestens einer gute Haftung mit benachbarten Schichten eingehenden Verbindungsschicht einer Polypropylenverbindung und/oder einer Mischung eines Polypropylenhomopolymeren und/oder Copolymeren und mindestens einem thermoplastischen Elastomeren und/oder Polyisobutylen, und
einer an der benachbarten Verbindungsschicht haftenden Innenschicht aus einer Mischung eines Polypropylenhomopolymeren und/oder Copolymeren mit mindestens einem thermoplastischen Elastomeren.

2. Mehrlagenfolie nach Anspruch 1, wobei das mindestens eine thermoplastische Elastomer ausgewählt ist aus der Gruppe bestehend aus Styrolblockcopolymeren, Styrolethylenbutylstryoltriblockpolymer, Styrolbuthylenstyroldiblockcopolymer, Styrolethylenpropylenstyroltriblockpolymer und Styrolisoprenstyroltriblockpolymer, Polyetherestern, Polyurethanen, Polyetheramiden, EPDM/PP-Mischungen und Butylkautschuk/PP-Mischungen.

3. Mehrlagenfolie nach einem der vorangehenden Ansprüche, wobei die Außenschicht ausgewählt ist aus der Gruppe bestehend aus Polyamid 6, Polyamid 610, Polyamid 6/66, Polyamid 66/610, aromatischen Polyamiden, Mischungen derselben; Polypropylenhomopolymeren; und einer Mischung von 65 bis 98 Gew.% eines aromatischen Polyamids mit einem Polyamid 66.

4. Mehrlagenfolie nach Anspruch 3, wobei das Polyamid 66 ein Polyamid mit einer Viskositätszahl von mindestens 200 (nach DIN 53727/Schwefelsäure) ist.

5. Mehrlagenfolie nach einem der vorangehenden Ansprüche, wobei die mindestens eine Außenschicht eine Barrierewirkung gegenüber Sauerstoff und/oder Kohlenstoffdioxid besitzt.

6. Mehrlagenfolie nach einem der vorangehenden Ansprüche, wobei die der Außenschicht benachbarte Schicht ausgewählt ist aus der Gruppe bestehend von Haftvermittlern für Polypropylen/Polyamid.

7. Mehrlagenfolie nach einem der vorangehenden Ansprüche, wobei die Verbindungsschicht und die siegelbare Innenschicht eine Mischung eines Polypropylencopolymeren und einem TPE-S (bevorzugt 10 - 50Gew.% der jeweiligen Schicht SEBS) aufweist.

8. Mehrlagenfolie nach Anspruch 7, wobei die Mischung der Verbindungsschicht ferner Weichmacher und/oder Verarbeitungshilfsmittel aufweist.

9. Mehrlagenfolie nach einem der vorangehenden Ansprüche, **dadurch gekennzeichnet, daß** das Polypropylenhomopolymere zusätzlich ein Nukleierungsmittel aufweisen kann.

10. Mehrlagenfolie nach einem der vorangehenden Ansprüche, **dadurch gekennzeichnet, daß** sie hitzesterilisierbar ist.

11. Mehrlagenfolie nach einem der vorangehenden Ansprüche, **dadurch gekennzeichnet, daß** die Foliendicke von 100 bis 350 µm ist.

12. Mehrlagenfolie nach einem der vorangehenden Ansprüche, **dadurch gekennzeichnet, daß** ein Temperaturgradient der Schmelzpunkte der Folienschichten von der Außen- zur Innenschicht besteht, so daß unter Wärmeeinwirkung die Innenschicht vor der Außenschicht schmilzt.

13. Verfahren zur Herstellung einer Mehrlagenfolie nach einem der vorangehenden Ansprüche, das Coextrudieren von mindestens zwei Schichten der Mehrlagenfolie aufweist.

14. Verfahren zur Herstellung einer Mehrlagenfolie nach einem der vorangehenden Ansprüche, wobei die Coextrusion von oben nach unten unter Abschrecken erfolgt.

15. Verfahren nach Anspruch 14, **dadurch gekennzeichnet, daß** das Abschrecken durch Coextrusion in ein Wasserbad erfolgt.

16. Verfahren nach einem der vorangehenden Ansprüche, wobei die coextrudierte Schicht in Form eines Schlauchs oder einer Flachbahn extrudiert wird.

17. Verfahren nach einem der vorangehenden Ansprüche, wobei das Material als Schlauch extrudiert wird, wobei bevorzugt die flachgelegte Schlauchbreite gleich der späteren Beutelbreite ist.

18. Verfahren nach einem der vorangehenden Ansprüche, wobei die Außenschicht durch Kaschieren aufgebracht wird.

19. Verwendung der Mehrlagenfolie nach einem der vorangehenden Ansprüche als Verpackungsmaterial für Nahrungsmittel, Wein, gefrorenen Kaffeextrakt, Suppen, Marmelade und Tiefkühlkost; medizinische Flüssigkeiten bzw. -lösungen, wie Kochsalzlösungen, Aminosäurelösungen, Dialyselösungen, Blutersatzmittellösungen und Blut, sonstige flüssige und pastöse Produkte.

## Claims

1. Transparent multilayer film with
a polymeric outer layer, and
entering into good adhesion with adjacent layers, at least one bonding layer composed of a polypropylene compound and/or a mixture of a polypropylene homopolymer and/or a copolymer and at least one thermoplastic elastomer and/or polyisobutylene, and
adhering to the adjacent bonding layer, an inner layer made from a mixture of a polypropylene homopolymer and/or a copolymer with at least one thermoplastic elastomer.

2. Multilayer film according to Claim 1, where the at least one thermoplastic elastomer has been selected from the group consisting of styrene block copolymers, styrene-ethylene/butylene-styrene triblock polymer, styrene-butylene-styrene triblock copolymer, styrene-ethylene/propylene-styrene triblock polymer and styrene-isoprene-styrene triblock polymer, polyetheresters, polyurethanes, polyetheramides, EPDM/PP mixtures and butyl rubber/PP mixtures.

3. Multilayer film according to any of the preceding claims, where the outer layer has been selected from the group consisting of nylon-6, nylon-6,10, nylon-6/6,6, nylon-6,6/6,10, aromatic polyamides, and mixtures of the same; polypropylene homopolymers; and a mixture of from 65 to 98% by weight of an aromatic polyamide with a nylon-6,6.

4. Multilayer film according to Claim 3, where the nylon-6,6 is a polyamide with a viscosity number of at least 200 (to DIN 53727/sulphuric acid).

5. Multilayer film according to any of the preceding claims, where the at least one outer layer has barrier action with respect to oxygen and/or carbon dioxide.

6. Multilayer film according to any of the preceding claims, where the layer adjacent to the outer layer has been selected from the group consisting of adhesion promoters for polypropylene/polyamide.

7. Multilayer film according to any of the preceding claims, where the bonding layer and the sealable inner layer comprise a mixture of a polypropylene copolymer and a TPES (preferably from 10 to 50% by weight of the respective layer SEBS).

8. Multilayer film according to Claim 7, where the mixture of the bonding layer also comprises plasticizers and/or processing aids.

9. Multilayer film according to any of the preceding claims, **characterized in that** the polypropylene homopolymer may also comprise a nucleating agent.

10. Multilayer film according to any of the preceding claims, **characterized in that** it is heat-sterilizable.

11. Multilayer film according to any of the preceding claims, **characterized in that** the thickness of the film is from 100 to 350 µm.

12. Multilayer film according to any of the preceding claims, **characterized in that** there is a temperature gradient of the melting points of the layers of the film from the outer to the inner layer, so that on exposure to heat the inner layer melts before the outer layer.

13. Process for producing a multilayer film according to any of the preceding claims, comprising coextrusion of at least two layers of the multilayer film.

14. Process for producing a multilayer film according to any of the preceding claims, where the coextrusion takes place in a downward direction, with quenching.

15. Process according to Claim 14, **characterized in that** the quenching takes place through coextrusion into a water bath.

16. Process according to any of the preceding claims, where the coextruded layer is extruded in the form of a tube or of a flat web.

17. Process according to any of the preceding claims, where the material is extruded as a tube and where the width of the collapsed tube is preferably equal to the subsequent bag width.

18. Process according to any of the preceding claims, where the outer layer is applied by lamination.

19. Use of the multilayer film according to any of the preceding claims as packaging material for foods, wine, frozen coffee extract, soups, jam, and frozen foods; medical liquids or medical solutions, such as saline solutions, amino acid solutions, dialysis solutions, blood substitute solutions and blood, and other products in liquid or paste form.

## Revendications

1. Film multicouche transparent, comportant
une couche externe de polymère,
au moins une couche, assurant la jonction et présentant une bonne adhérence aux couches voisines, d'un composé de type polypropylène et/ou d'un mélange d'un homopolymère et/ou d'un copolymère de polypropylène et d'au moins un élastomère thermoplastique et/ou de polyisobutylène, et
une couche interne, adhérant à la couche de jonction voisine, d'un mélange d'un homopolymère et/ou d'un copolymère de polypropylène avec au moins un élastomère thermoplastique.

2. Film multicouche selon la revendication 1, dans lequel le au moins un élastomère thermoplastique est choisi dans le groupe constitué par des copolymères séquencés de styrène, un polymère triséquencé styrène/èthylène-butylène/styrène, un copolymère triséquencé styrène/butylène-styrène, un polymère triséquencé styrène/éthylène-propylène/styrène et un polymère triséquencé styrène/isoprène/styrène, des polyéther-esters, des polyuréthannes, des polyétheramides, des mélanges EPDM/PP et des mélanges de caoutchouc butyle/PP.

3. Film multicouche selon l'une quelconque des revendications précédentes, dans lequel la couche externe est choisie dans le groupe constitué par le polyamide 6, le polyamide 610, le polyamide 6/66, le polyamide 66/610, des polyamides aromatiques, des mélanges de ceux-ci ; des homopolymères polypropylène, et un mélange de 65 à 98 % en poids d'un polyamide aromatique et d'un polyamide 66.

4. Film multicouche selon la revendication 3, dans lequel le polyamide 66 est un polyamide ayant un indice de viscosité d'au moins 200 (selon DIN 53727/acide sulfurique).

5. Film multicouche selon l'une quelconque des revendications précédentes, dans lequel la au moins une couche externe a un effet barrière vis-à-vis de l'oxygène et/ou du dioxyde de carbone.

6. Film multicouche selon l'une quelconque des revendications précédentes, dans lequel la couche voisine de la couche externe est choisie dans le groupe constitué par des promoteurs d'adhérence pour polypropylène/polyamide.

7. Film multicouche selon l'une quelconque des revendications précédentes, dans lequel la couche de jonction et la couche interne soudable comportent un mélange d'un copolymère de polypropylène et d'un TPE-S (de préférence 10-50 % en poids de la couche respective de SEBS).

8. Film multicouche selon la revendication 7, dans lequel le mélange de la couche de jonction en outre comporte des plastifiants et/ou des adjuvants de mise en oeuvre.

9. Film multicouche selon l'une quelconque des revendications précédentes, **caractérisé en ce que** l'homopolymère polypropylène peut comporter en outre un agent de nucléation.

10. Film multicouche selon l'une quelconque des revendications précédentes, **caractérisé en ce qu'**il peut être stérilisé à la chaleur.

11. Film multicouche selon l'une quelconque des revendications précédentes, **caractérisé en ce que** l'épaisseur du film va de 100 à 350 µm.

12. Film multicouche selon l'une quelconque des revendications précédentes, **caractérisé en ce qu'**il existe un gradient de température des points de fusion des couches de film, de la couche externe à la couche interne, de sorte que, sous l'effet de la chaleur, la couche interne fond avant la couche externe.

13. Procédé pour la fabrication d'un film multicouche selon l'une quelconque des revendications précédentes, qui comprend la coextrusion d'au moins deux couches du film multicouche.

14. Procédé pour la fabrication d'un film multicouche selon l'une quelconque des revendications précédentes, dans lequel la coextrusion s'effectue de haut en bas avec brusque refroidissement.

15. Procédé selon la revendication 14, **caractérisé en ce que** le brusque refroidissement s'effectue par coextrusion dans un bain d'eau.

16. Procédé selon l'une quelconque des revendications précédentes, dans lequel la couche coextrudée est extrudée sous forme d'un tuyau souple ou d'une bande plate.

17. Procédé selon l'une quelconque des revendications précédentes, dans lequel le matériau du tuyau souple est extrudé, la largeur du tuyau souple mis à plat étant de préférence égale à la largeur du sac ultérieur.

18. Procédé selon l'une quelconque des revendications précédentes, dans lequel la couche externe est appliquée par contrecollage.

19. Utilisation du film multicouche selon l'une quelconque des revendications précédentes, en tant que matériau d'emballage pour denrées alimentaires, vin, extrait de café congelé, potages, confitures et produits alimentaires surgelés ; liquides médicaux ou solutions médicales, tels que des solutions de chlorure de sodium, des solutions d'acides aminés, des solutions de dialyse, des solutions de succédanés de sang et le sang, d'autres produits liquides et pâteux.
